# EUROPEAN PATENT SPECIFICATION

(11) **EP 3 449 025 B1**
(45) Date of publication and mention of the grant of the patent: **23.08.2023**
(21) Application number: 17790207.9
(22) Date of filing: 24.04.2017
(51) Int. Cl.: C22C 14/00, B22F 3/105, B33Y 70/00

(54) **BCC MATERIALS OF TITANIUM, ALUMINUM, VANADIUM, AND IRON, AND PRODUCTS MADE THEREFROM**
BCC-MATERIALIEN AUS TITAN, ALUMINIUM, VANADIUM UND EISEN SOWIE DARAUS HERGESTELLTE PRODUKTE
MATÉRIAUX BCC EN TITANE, ALUMINIUM, VANADIUM ET EN FER, ET PRODUITS FABRIQUÉS À PARTIR DE CEUX-CI

(30) Priority: 25.04.2016 US 201662327222 P
(43) Date of publication of application: 06.03.2019
(73) Proprietor: Howmet Aerospace Inc., Pittsburgh, PA 15212-5858 (US)
(72) Inventor: LIN, Jen C., Export, Pennsylvania 15632 (US); YAN, Xinyan, Murrysville, Pennsylvania 15668 (US); SABOL, Joseph C., Aspinwall, Pennsylvania 15215 (US); HEARD, David W., Pittsburgh, Pennsylvania 15218 (US); ZARANDI, Faramarz MH., Pittsburgh, Pennsylvania 15224 (US); SUN, Fusheng, Canfield, Ohio 44406 (US); CRIST, Ernest M. Jr., Transfer, Pennsylvania 16154 (US); TAMIRISAKANDALA, Sesh A., Solon, Ohio 44139 (US)
(74) Representative: Forresters IP LLP
(86) International application number: PCT/US2017/029211
(87) International publication number: WO 2017/189460

(56) References cited:
- EP-A2- 1 486 576
- WO-A2-85/03190
- JP-A- 2012 107 282
- US-A1- 2011 180 188
- US-A1- 2012 076 686
- US-A1- 2012 202 085
- US-A1- 2014 053 956
- US-A1- 2016 008 903
- US-A1- 2016 024 631

## Description

### BACKGROUND

Titanium alloys are known for their low density (60% of that of steel) and their high strength. Additionally, titanium alloys may have good corrosion resistant properties. Pure titanium has an alpha (hcp) crystalline structure.
WO 85/03190 discloses a titanium alloy comprising 10 wt. % vanadium, 2 wt. % iron, and 3 wt. % aluminum.
JP 2012107282 discloses a titanium alloy comprising 4.0 to less than 5.5% Al, 1.1 to less than 3.1% Fe, less than 4.0% Cr, and less than 8.0% V.

### SUMMARY OF THE DISCLOSURE

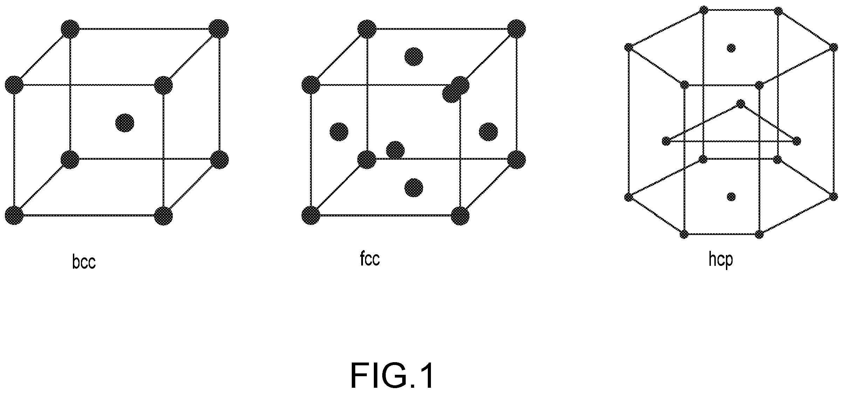

The present intention provides a titanium alloy defined in claim 1, and preferred embodiments defined in dependent claims 2-13. Broadly, the titanium alloy belongs to new bcc (beta) materials, which are not according to the present invention, made from titanium, aluminum, vanadium, and iron having a single phase field of a body-centered cubic (bcc) solid solution structure immediately below the solidus temperature of the material ("the new materials"). As known to those skilled in the art, and as shown in FIG. 1, a body-centered cubic (bcc) unit cell has atoms at each of the eight corners of a cube plus one atom in the center of the cube. Each of the corner atoms is the corner of another cube so the corner atoms are shared among eight unit cells. Due to the unique compositions described herein, the new materials may realize a single phase field of a bcc solid solution structure immediately below the solidus temperature of the material. The new materials may also have a high liquidus point and a narrow equilibrium freezing range (e.g., for restricting microsegregation during solidification), making them suitable for production through conventional ingot processing, as well as powder metallurgy, shape casting, additive manufacturing, and combinations thereof (hybrid processing).

The new bcc materials generally include 2.0 - 6.0 wt. % Al, 4.0 - 12.0 wt. % V, and 1.0 - 5.0 wt. % Fe, the balance being titanium, any optional incidental elements, and unavoidable impurities, wherein the material includes a sufficient amount of the titanium, aluminum, vanadium, and iron to realize the bcc crystalline structure. Some small fraction of alpha phase (hcp) may be present through a solid-state transformation at a low temperature in the alloy. The below table provides some examples of useful new materials.

**Table 1 - Example Titanium Alloys**

| ***Ex. Alloy*** | ***Al (wt. %)*** | ***V (wt. %)*** | ***Fe (wt. %)*** | ***Balance*** |
|---|---|---|---|---|
| Alloy 1 | 2.0 - 6.0 | 4.0 - 12.0 | 1.0 - 5.0 | Ti, any incidental elements and impurities |
| Alloy 2 | 2.25 - 5.75 | 5.0 - 11.0 | 1.0 - 4.25 | Ti, any incidental elements and impurities |
| Alloy 3 | 2.25 - 5.50 | 5.5 - 9.5 | 1.5 - 4.0 | Ti, any incidental elements and impurities |
| Alloy 4 | 2.5 - 5.25 | 6.0 - 9.0 | 2.0 - 4.0 | Ti, any incidental elements and impurities |
| Alloy 5 | 2.75 - 5.25 | 6.5 - 8.75 | 2.25 - 3.75 | Ti, any incidental elements and impurities |
| Alloy 6 | 3.0 - 5.0 | 7.5 - 8.5 | 2.5 - 3.5 | Ti, any incidental elements and impurities |

As used herein, "alloying elements" means the elements of aluminum, vanadium, iron, and titanium of the alloy, and within the compositional limits defined herein. As used herein, "incidental elements" includes grain boundary modifiers, casting aids, and/or grain structure control materials, and the like, that may be used in the alloy, such as silicon, yttrium, erbium, carbon, oxygen, and boron, among others. In one embodiment, the beta transus temperature of the new materials is not greater than 850°C. In one embodiment, the materials may optionally include a sufficient amount of one or more of the following incidental elements to induce additional precipitates at elevated temperatures:
- Si: up to 1 wt. %
- Y: up to 1 wt. %
- Er: up to 1 wt. %
- C: up to 0.5 wt. %
- O: up to 0.5 wt. %
- B: up to 0.5 wt. %

While the amount of such optional additional element(s) in the material should be sufficient to induce the production of strengthening precipitates, the amount of such optional additional element(s) should also be restricted to avoid primary phase particles.

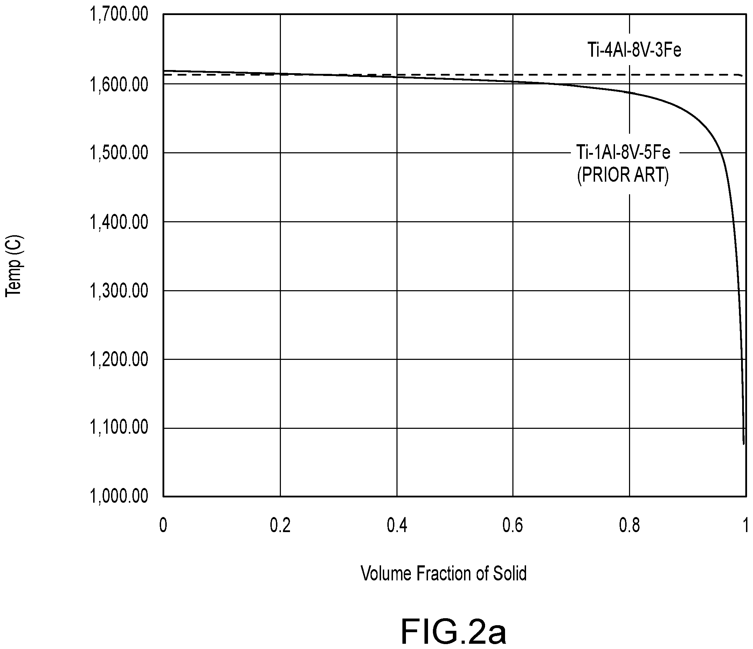

The new materials may have a narrow freezing range, which may result in restricted (or no) hot cracking and/or microsegregation. Indeed, as shown in FIG. 2a and Tables 1-2, below, the new alloys may solidify almost like a pure metal that has an invariant temperature with coexisting liquid and solid.

Tables 2-3, below, provide some examples of liquidus temperature, solidus temperature, equilibrium freezing range, non-equilibrium freezing range, beta transus temperature, solvus temperature, precipitate phase(s) and density for one embodiment of the new materials.

**Table 2 - Alloy Properties (Calculated)**

| **Alloy** | **Approx. Liquidus (°C)** | **Approx. Solidus (°C)** | **Approx. Equil. Freezing Range (°C)** | **Approx. Non-Equil. Freezing Range (°C)** | **Matrix Phase** |
|---|---|---|---|---|---|
| Ti-4Al-8V-3Fe | 1613 | 1612 | 1 | 5 | Beta + alpha |
| Ti-1Al-8V-5Fe (Prior art) | 1618 | 1596 | 22 | 542 | Beta + alpha |

**Table 3 - Alloys Properties (cont.)**

| **Alloy** | **Approx Beta transus (°C)** | **Precipitate Phase** | **Approx. Solvus (°C)** | **Density (g/cm³)** |
|---|---|---|---|---|
| Ti-4Al-8V-3Fe | 825 | Ti₃Al (α₂) | 372 | 4.57 |
| Ti-1Al-8V-5Fe (Prior art) | 745 | FeTi | 197 | 4.70 |

The new materials described herein have a narrow freezing range in both the equilibrium state, i.e., the temperature range between liquidus and solidus and the non-equilibrium state, i.e., the temperature range between liquidus and the final eutectic transformation temperature for the predicted solidification path. The equilibrium freezing range could represent a slow solidification rate process such as investment casting, single crystal growth or large ingot casting. The non-equilibrium state could represent a process with a reasonably fast cooling rate including thin-wall casting in metal molds and additive manufacturing, among others, in which equilibrium is achieved at the solid/liquid interface. Compared to the conventional alloy, the new material has higher beta transus temperature, which indicates higher thermal stability of hcp (α) phase of the alloy for applications at elevated temperatures.

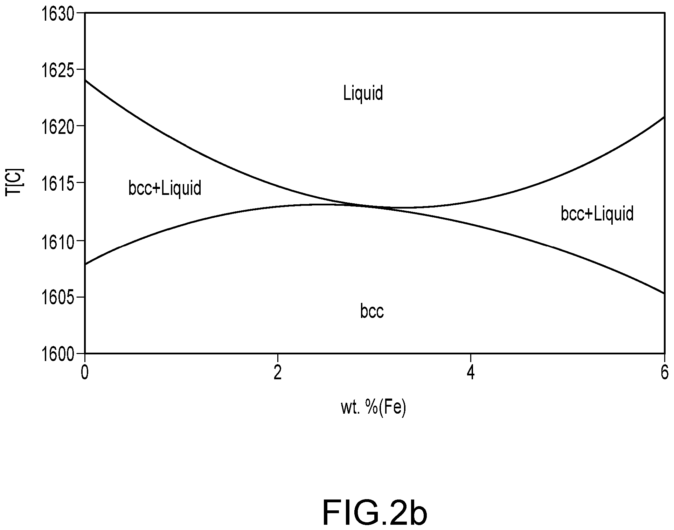

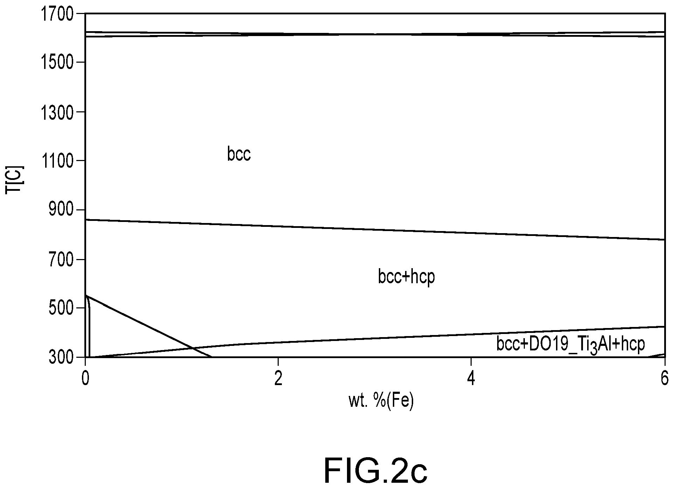

As noted above, the new materials generally include 1.0 - 5.0 wt. % Fe. FIG. 2b shows the effect of iron content on the freezing range of a Ti-4Al-8V-XFe alloy. The alloy has a narrow freezing range, particularly at around 3 wt. % Fe. The equilibrium freezing range is narrower than approximately 5°C from about 1 to 5 wt. % Fe. The effect of iron content on the equilibrium phase fields of a Ti-4Al-8V-XFe alloy in the solid state is shown in FIG. 2c. It indicates that the stability of beta (β) and Ti₃Al (α₂) phase increases with increasing Fe. The increased beta stability could degrade the strength of alloy at elevated temperatures and the increased Ti₃Al could reduce the ductility of the alloy. In one embodiment, an alloy includes at least 1.5 wt. % Fe. In another embodiment, an alloy includes at least 2.0 wt. % Fe. In yet another embodiment, an alloy includes at least 2.25 wt. % Fe. In another embodiment, an alloy includes at least 2.5 wt. % Fe. In one embodiment, an alloy includes not greater than 4.75 wt. % Fe. In another embodiment, an alloy includes not greater than 4.5 wt. % Fe. In yet another embodiment, an alloy includes not greater than 4.25 wt. % Fe. In another embodiment, an alloy includes not greater than 4.0 wt. % Fe. In yet another embodiment, an alloy includes not greater than 3.75 wt. % Fe. In another embodiment, an alloy includes not greater than 3.5 wt. % Fe. In one embodiment, an alloy includes 1.0 - 4.25. wt. % Fe. In another embodiment, an alloy includes 1.5 - 4.0 wt. % Fe. In yet another embodiment, an alloy includes 2.0 - 4.0 wt. % Fe. In another embodiment, an alloy includes 2.25 - 3.75 wt. % Fe. In yet another embodiment, an alloy includes 2.5 - 3.5 wt. % Fe

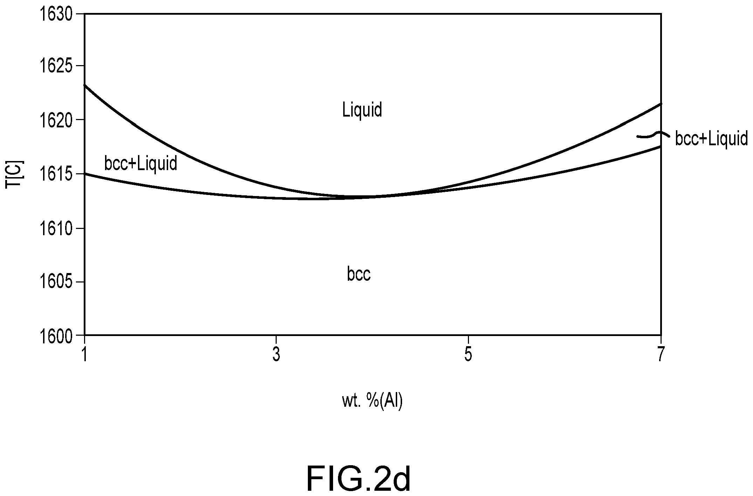

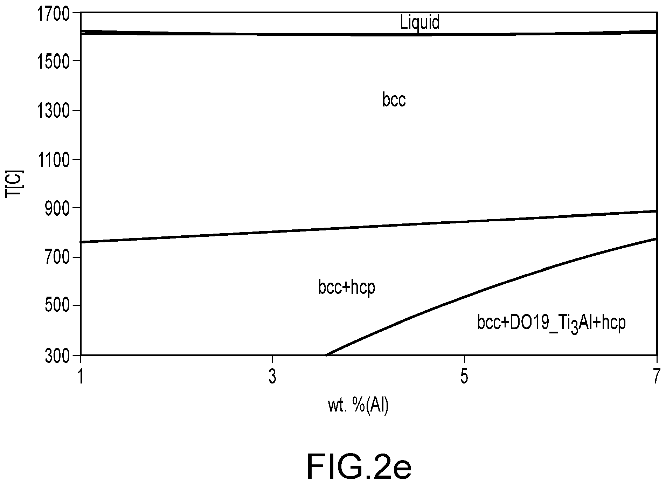

As noted above, the new materials generally include 2.0 - 6.0 wt. % Al. The effect of aluminum content on the equilibrium freezing range of a Ti-8V-3Fe-XAl alloys is given in FIG. 2d. It shows that the minimum freezing range exists at approximately 4 wt. % of Al. The freezing range is narrower than approximately 5°C from about 2 to 6 wt. % Al. FIG. 2e shows the effect of aluminum content on equilibrium phase fields of a Ti-8V-3Fe-XAl alloy in the solid state. As indicated in FIG. 2e, both hcp (α) and Ti₃Al (α₂) are stabilized with increasing aluminum content in the alloy. As mentioned previously, the hcp (α) increases the strength at elevated temperatures but Ti₃Al (α₂) could decrease the ductility of the alloy. In one embodiment, the alloy includes at least 2.0 wt. % Al. In another embodiment, the alloy includes at least 2.25 wt. % Al. In yet another embodiment, the alloy includes at least 2.5 wt. % Al. In another embodiment, the alloy includes at least 2.75 wt. % Al. In yet another embodiment, the alloy includes at least 3.0 wt. % Al. In one embodiment, the alloy includes not greater than 6.0 wt. % Al. In another embodiment, the alloy includes not greater than 5.75 wt. % Al. In yet another embodiment, the alloy includes not greater than 5.5 wt. % Al. In another embodiment, the alloy includes not greater than 5.25 wt. % Al. In yet another embodiment, the alloy includes not greater than 5.0 wt. % Al. In one embodiment, an alloy includes 2.25-5.75 wt. % Al. In another embodiment, an alloy includes 2.25 - 5.5 wt. % Al. In yet another embodiment, an alloy includes 2.5 - 5.25 wt. % Al. In another embodiment, an alloy includes 2.75-5.25 wt. % Al. In another embodiment, an alloy includes 3.0-5.0 wt. % Al.

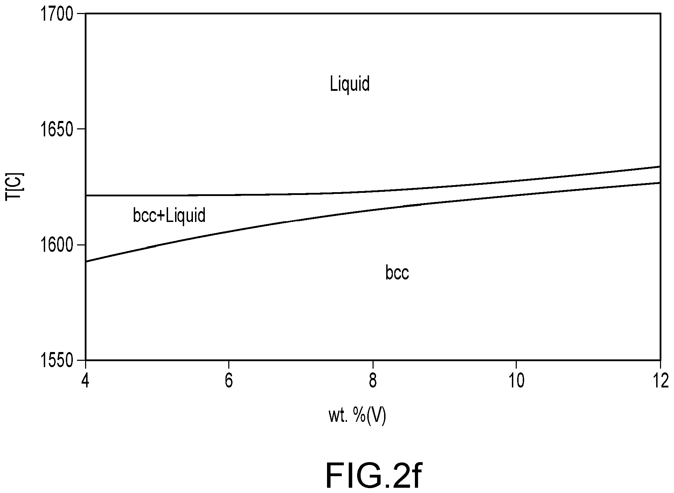

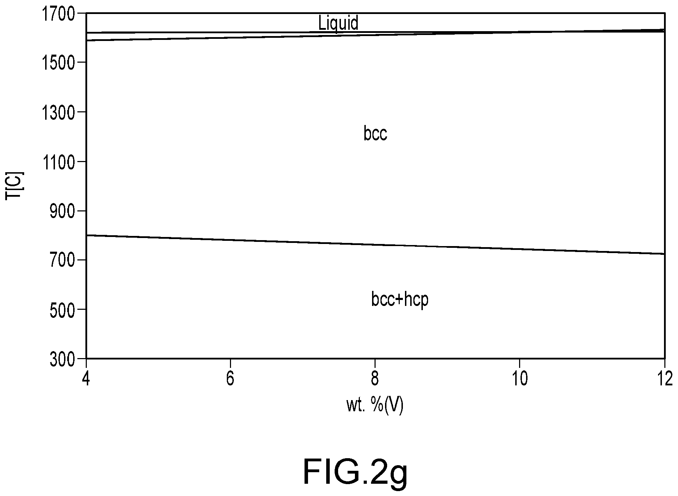

As noted above, the new materials generally include 4.0 - 12.0 wt. % V. The effect of vanadium content on the equilibrium freezing range of a Ti-4Al-3Fe-XV alloy is given in FIG. 2f. FIG. 2g shows the effect of vanadium content on equilibrium phase fields of a Ti-4Al-3Fe-XV alloy in the solid state. As indicated in FIG. 2g, beta (β) is stabilized with increasing vanadium content in the alloy. As mentioned previously, the beta (β) could decrease the strength of the alloy, particularly at elevated temperatures. In one embodiment, the alloy includes at least 5.0 wt. % V. In another embodiment, the alloy includes at least 5.5 wt. % V. In yet another embodiment, the alloy includes at least 6.0 wt. % V. In another embodiment, the alloy includes at least 6.5 wt. % V. In yet another embodiment, the alloy includes at least 7.5 wt. % V. In one embodiment, the alloy includes not greater than 12.0 wt. % V. In another embodiment, the alloy includes not greater than 11.0 wt. % V. In yet another embodiment, the alloy includes not greater than 10.0 wt. % V. In another embodiment, the alloy includes not greater than 9.5 wt. % V. In yet another embodiment, the alloy includes not greater than 9.0 wt. % V. In another embodiment, the alloy includes not greater than 8.75 wt. % V. In yet another embodiment, the alloy includes not greater than 8.5 wt. % V. In one embodiment, an alloy includes 5.0-11.0 wt. % V. In another embodiment, an alloy includes 5.0-10.0 wt. % V. In yet another embodiment, an alloy includes 5.5-9.5 wt. % V. In another embodiment, an alloy includes 6.0-9.0 wt. % V. In yet another embodiment, an alloy includes 6.5-8.75 wt. % V. In yet another embodiment, an alloy includes 7.0-8.75 wt. % V. In another embodiment, an alloy includes 7.5- 8.5 wt. % V.

In one embodiment, a new bcc material includes 2.0 - 6.0 wt. % Al, 6.0 - 8.75 wt. % V, and 1.0 - 4.25 wt. % Fe, the balance being titanium and unavoidable impurities, wherein the material includes a sufficient amount of the titanium, aluminum, vanadium, and iron to realize the bcc crystalline structure.

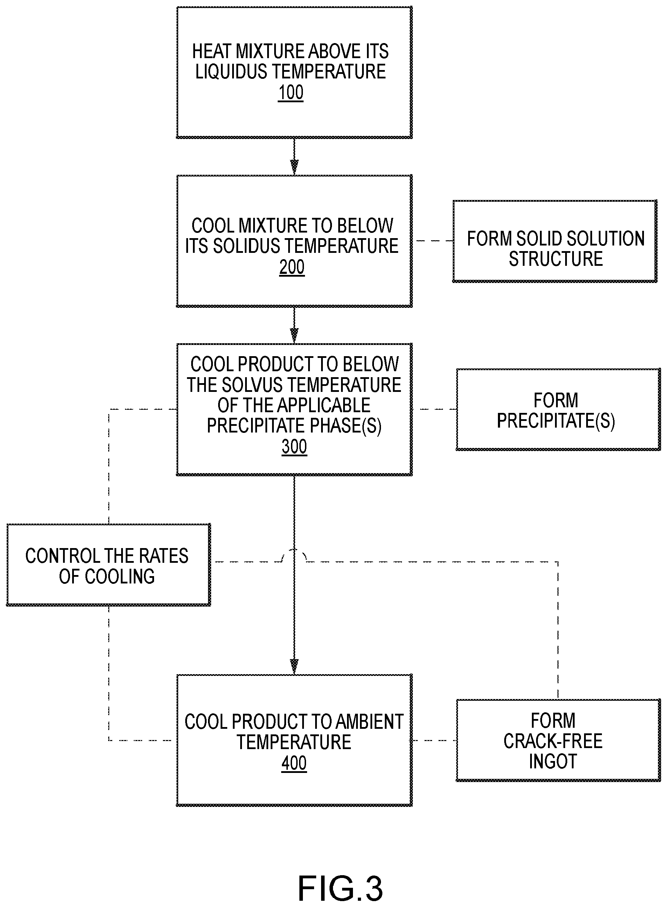

In one approach, and referring now to FIG. 3, a method of producing a new material includes the steps of (100) heating a mixture comprising Ti, Al, V, and Fe, and within the scope of the compositions described above, above a liquidus temperature of the mixture, thereby forming a liquid, (200) cooling the mixture from above the liquidus temperature to below the solidus temperature, wherein, due to the cooling, the mixture forms a solid product having a bcc (body-centered cubic) solid solution structure (potentially with other phases due to microsegregation), and wherein the mixture comprises a sufficient amount of the Ti, the Al, the V, and the Fe to realize the bcc solid solution structure, and (300) cooling the solid product to below the solvus temperature of precipitate phase(s) of the mixture, thereby forming one or more precipitate phases within the bcc solid solution structure of the solid product, wherein the mixture comprises a sufficient amount of the Ti, the Al, the V, and the Fe to realize the precipitate phases within the bcc solid solution structure. In one embodiment, the bcc solid solution is the first phase to form from the liquid.

In one embodiment, controlled cooling of the material is employed to facilitate realization of an appropriate end product. For instance, a method may include the step of (400) cooling the mixture to ambient temperature, and a method may include controlling rates of cooling during at least cooling steps (300) and (400) such that, upon conclusion of step (400), i.e., upon reaching ambient temperature, a crack-free ingot is realized. Controlled cooling may be accomplished by, for instance, using an appropriate water cooled casting mold.

As used herein, "ingot" means a cast product of any shape. The term "ingot" includes billet. As used herein, "crack-free ingot" means an ingot that is sufficiently free of cracks such that it can be used as a fabricating ingot. As used herein, "fabricating ingot" means an ingot suitable for subsequent working into a final product. The subsequent working may include, for instance, hot working and/or cold working via any of rolling, forging, extrusion, as well as stress relief by compression and/or stretching.

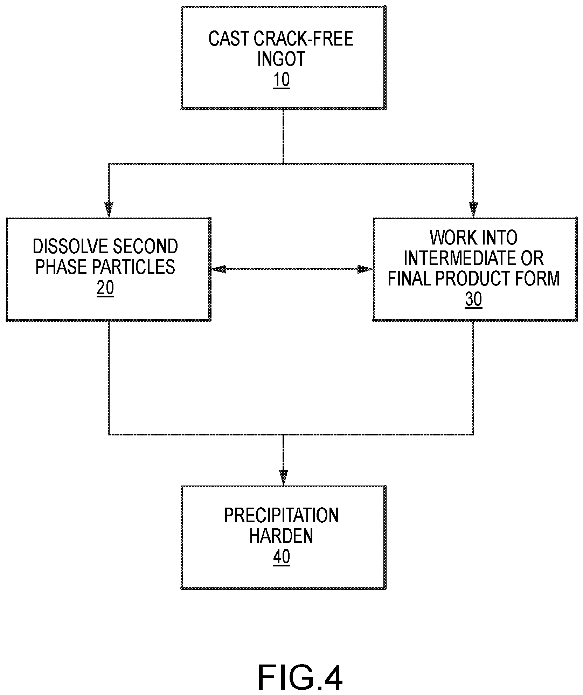

In one embodiment, a crack-free product, such as a crack-free ingot, may be processed, as appropriate, to obtain a final wrought product from the material. For instance, and referring now to FIGS. 3-4, steps (100) - (400) of FIG. 3, described above, may be considered a casting step (10), shown in FIG. 4, resulting in the above-described crack-free ingot. In other embodiments, the crack-free product may be a crack-free preform produced by, for instance, shape casting, additive manufacturing or powder metallurgy. In any event, the crack-free product may be further processed to obtain a wrought final product having the bcc solid solution structure, optionally, with one or more of the precipitate phase(s) therein. This further processing may include any combination of dissolving (20) and working (30) steps, described below, as appropriate to achieve the final product form. Once the final product form is realized, the material may be precipitation hardened (40) to develop strengthening precipitates. The final product form may be a rolled product, an extruded product or a forged product, for instance.

With continued reference to FIG. 4, as a result of the casting step (10), the ingot may include some second phase particles. The method may therefore include one or more dissolving steps (20), where the ingot, an intermediate product form and/or the final product form are heated above the solvus temperature of the applicable precipitate(s) but below the solidus temperature of the material, thereby dissolving some of or all of the second phase particles. The dissolving step (20) may include soaking the material for a time sufficient to dissolve the applicable second phase particles. After the soak, the material may be cooled to ambient temperature for subsequent working. Alternatively, after the soak, the material may be immediately hot worked via the working step (30).

The working step (30) generally involves hot working and/or cold working the ingot and/or an intermediate product form. The hot working and/or cold working may include rolling, extrusion or forging of the material, for instance. The working (30) may occur before and/or after any dissolving step (20). For instance, after the conclusion of a dissolving step (20), the material may be allowed to cool to ambient temperature, and then reheated to an appropriate temperature for hot working. Alternatively, the material may be cold worked at around ambient temperatures. In some embodiments, the material may be hot worked, cooled to ambient, and then cold worked. In yet other embodiments, the hot working may commence after a soak of a dissolving step (20) so that reheating of the product is not required for hot working.

The working step (30) may result in precipitation of second phase particles. In this regard, any number of post-working dissolving steps (20) can be utilized, as appropriate, to dissolve some of or all of the second phase particles that may have formed due to the working step (30).

After any appropriate dissolving (20) and working (30) steps, the final product form may be precipitation hardened (40). The precipitation hardening (40) may include heating the final product form to above the applicable solvus temperature(s) for a time sufficient to dissolve at least some second phase particles precipitated due to the working, and then rapidly cooling the final product form to below the applicable solvus temperature(s) thereby forming precipitate particles. The precipitation hardening (40) will further include holding the product at the target temperature for a time sufficient to form strengthening precipitates, and then cooling the product to ambient temperature, thereby realizing a final heat treated product having strengthening precipitates therein. In one embodiment, the final heat treated product contains ≥ 0.5 vol. % of the strengthening precipitates. The strengthening precipitates are preferably located within the matrix of the bcc solid solution structure, thereby conferring strength to the product through interactions with dislocations.

Due to the structure and composition of the new materials, the new materials may realize an improved combination of properties, such as an improved combination of at least two of density, ductility, strength, and fracture toughness, among others. Thus, the new materials may find use in various applications, such as use in low temperature applications (e.g., low temperature vehicle application, such as for an automotive or aerospace component).

The new materials described above can also be used to produce shape cast products or preforms. Shape cast products are those products that achieve their final or near final product form after the casting process. The new materials may be shape cast into any desired shape. In one embodiment, the new materials are shape cast into an automotive or aerospace component (e.g., shape cast into an engine component). After casting, the shape cast product may be subject to any appropriate dissolving (20) or precipitation hardening (40) steps, as described above. In one embodiment, a shape cast product consists essentially of the Ti, the Al, the V, and the Fe, and within the scope of the compositions described above. In one embodiment, the shape cast product includes ≥ 0.5 vol. % of strengthening precipitates.

While it has generally been described as relating to bcc matrix alloy materials having one or more of the above enumerated precipitate phase(s) therein, it is to be appreciated that other hardening phases may be applicable to the new bcc matrix alloy materials, and all such hardening phases (coherent or incoherent) may find utility in the bcc alloy materials described herein.

### Additive Manufacturing of New Materials

It is also possible to manufacture the new materials described above by additive manufacturing. As used herein, "additive manufacturing" means, "a process of joining materials to make objects from 3D model data, usually layer upon layer, as opposed to subtractive manufacturing methodologies", as defined in ASTM F2792-12a entitled "Standard Terminology for Additively Manufacturing Technologies". The new materials may be manufactured via any appropriate additive manufacturing technique described in this ASTM standard, such as binder jetting, directed energy deposition, material extrusion, material jetting, powder bed fusion, or sheet lamination, among others.

In one embodiment, an additive manufacturing process includes depositing successive layers of one or more powders and then selectively melting and/or sintering the powders to create, layer-by-layer, an additively manufactured body (product). In one embodiment, an additive manufacturing processes uses one or more of Selective Laser Sintering (SLS), Selective Laser Melting (SLM), and Electron Beam Melting (EBM), among others. In one embodiment, an additive manufacturing process uses an EOSINT M 280 Direct Metal Laser Sintering (DMLS) additive manufacturing system, or comparable system, available from EOS GmbH (Robert-Stirling-Ring 1, 82152 Krailling/Munich, Germany).

As one example, a feedstock, such as a powder or wire, comprising (or consisting essentially of) the alloying elements and any optional incidental elements, and within the scope of the compositions described above, may be used in an additive manufacturing apparatus to produce an additively manufactured body comprising a bcc solid solution structure, optionally with precipitate phase(s) therein. In some embodiments, the additively manufactured body is a crack-free preform. The powders may be selectively heated above the liquidus temperature of the material, thereby forming a molten pool having the alloying elements and any optional incidental elements, followed by rapid solidification of the molten pool.

As noted above, additive manufacturing may be used to create, layer-by-layer, a metal product (e.g., an alloy product), such as via a metal powder bed. In one embodiment, a metal powder bed is used to create a product (e.g., a tailored alloy product). As used herein a "metal powder bed" and the like means a bed comprising a metal powder. During additive manufacturing, particles of the same or different compositions may melt (e.g., rapidly melt) and then solidify (e.g., in the absence of homogenous mixing). Thus, products having a homogenous or non-homogeneous microstructure may be produced. One embodiment of a method of making an additively manufactured body may include (a) dispersing a powder comprising the alloying elements and any optional incidental elements, (b) selectively heating a portion of the powder (e.g., via a laser) to a temperature above the liquidus temperature of the particular body to be formed, (c) forming a molten pool having the alloying elements and any optional incidental elements, and (d) cooling the molten pool at a cooling rate of at least 1000°C per second. In one embodiment, the cooling rate is at least 10,000°C per second. In another embodiment, the cooling rate is at least 100,000°C per second. In another embodiment, the cooling rate is at least 1,000,000°C per second. Steps (a)-(d) may be repeated as necessary until the body is completed, i.e., until the final additively manufactured body is formed / completed. The final additively manufactured body comprising the bcc solid solution structure, optionally with the precipitate phase(s) therein, may be of a complex geometry, or may be of a simple geometry (e.g., in the form of a sheet or plate). After or during production, an additively manufactured product may be deformed (e.g., by one or more of rolling, extruding, forging, stretching, compressing).

The powders used to additively manufacture a new material may be produced by atomizing a material (e.g., an ingot or melt) of the new material into powders of the appropriate dimensions relative to the additive manufacturing process to be used. As used herein, "powder" means a material comprising a plurality of particles. Powders may be used in a powder bed to produce a tailored alloy product via additive manufacturing. In one embodiment, the same general powder is used throughout the additive manufacturing process to produce a metal product. For instance, the final tailored metal product may comprise a single region / matrix produced by using generally the same metal powder during the additive manufacturing process. The final tailored metal product may alternatively comprise at least two separately produced distinct regions. In one embodiment, different metal powder bed types may be used to produce a metal product. For instance, a first metal powder bed may comprise a first metal powder and a second metal powder bed may comprise a second metal powder, different than the first metal powder. The first metal powder bed may be used to produce a first layer or portion of the alloy product, and the second metal powder bed may be used to produce a second layer or portion of the alloy product. As used herein, a "particle" means a minute fragment of matter having a size suitable for use in the powder of the powder bed (e.g., a size of from 5 microns to 100 microns). Particles may be produced, for example, via atomization.

The additively manufactured body may be subject to any appropriate dissolving (20), working (30) and/or precipitation hardening steps (40), as described above. If employed, the dissolving (20) and/or the working (30) steps may be conducted on an intermediate form of the additively manufactured body and/or may be conducted on a final form of the additively manufactured body. If employed, the precipitation hardening step (40) is generally conducted relative to the final form of the additively manufactured body. In one embodiment, an additively manufactured body consists essentially of the alloying elements and any incidental elements and impurities, such as any of the material compositions described above, optionally with ≥ 0.5 vol. % of precipitate phase(s) therein.

In another embodiment, the new material is a preform for subsequent working. A preform may be an ingot, a shape casting, an additively manufactured product, or a powder metallurgy product. In one embodiment, a preform is of a shape that is close to the final desired shape of the final product, but the preform is designed to allow for subsequent working to achieve the final product shape. Thus, the preform may be worked (30) such as by forging, rolling, or extrusion to produce an intermediate product or a final product, which intermediate or final product may be subject to any further appropriate dissolving (20), working (30) and/or precipitation hardening steps (40), as described above, to achieve the final product. In one embodiment, the working comprises hot isostatic pressing (hipping) to compress the part. In one embodiment, an alloy preform may be compressed and porosity may be reduced. In one embodiment, the hipping temperature is maintained below the incipient melting point of the alloy preform. In one embodiment, the preform may be a near net shape product.

In one approach, electron beam (EB) or plasma arc techniques are utilized to produce at least a portion of the additively manufactured body. Electron beam techniques may facilitate production of larger parts than readily produced via laser additive manufacturing techniques. In one embodiment, a method comprises feeding a small diameter wire (e.g., ≤ 2.54 mm in diameter) to the wire feeder portion of an electron beam gun. The wire may be of the compositions, described above. The electron beam (EB) heats the wire above the liquidus point of the body to be formed, followed by rapid solidification (e.g., at least 100°C per second) of the molten pool to form the deposited material. The wire could be fabricated by a conventional ingot process or by a powder consolidation process. These steps may be repeated as necessary until the final product is produced. Plasma arc wire feed may similarly be used with the alloys disclosed herein. In one embodiment, not illustrated, an electron beam (EB) or plasma arc additive manufacturing apparatus may employ multiple different wires with corresponding multiple different radiation sources, each of the wires and sources being fed and activated, as appropriate to provide the product having a metal matrix having the alloying elements and any optional incidental elements.

In another approach, a method may comprise (a) selectively spraying one or more metal powders towards or on a building substrate, (b) heating, via a radiation source, the metal powders, and optionally the building substrate, above the liquidus temperature of the product to be formed, thereby forming a molten pool, (c) cooling the molten pool, thereby forming a solid portion of the metal product, wherein the cooling comprises cooling at a cooling rate of at least 100°C per second. In one embodiment, the cooling rate is at least 1000°C per second. In another embodiment, the cooling rate is at least 10,000°C per second. The cooling step (c) may be accomplished by moving the radiation source away from the molten pool and/or by moving the building substrate having the molten pool away from the radiation source. Steps (a)-(c) may be repeated as necessary until the metal product is completed. The spraying step (a) may be accomplished via one or more nozzles, and the composition of the metal powders can be varied, as appropriate, to provide tailored final metal products having a metal matrix, the metal matrix having the alloying elements and any optional incidental elements. The composition of the metal powder being heated at any one time can be varied in real-time by using different powders in different nozzles and/or by varying the powder composition(s) provided to any one nozzle in real-time. The work piece can be any suitable substrate. In one embodiment, the building substrate is, itself, a metal product (e.g., an alloy product.)

As noted above, welding may be used to produce metal products (e.g., to produce alloy products). In one embodiment, the product is produced by a melting operation applied to pre-cursor materials in the form of a plurality of metal components of different composition. The pre-cursor materials may be presented in juxtaposition relative to one another to allow simultaneous melting and mixing. In one example, the melting occurs in the course of electric arc welding. In another example, the melting may be conducted by a laser or an electron beam during additive manufacturing. The melting operation results in the plurality of metal components mixing in a molten state and forming the metal product, such as in the form of an alloy. The pre-cursor materials may be provided in the form of a plurality of physically separate forms, such as a plurality of elongated strands or fibers of metals or metal alloys of different composition or an elongated strand or a tube of a first composition and an adjacent powder of a second composition, e.g., contained within the tube or a strand having one or more clad layers. The pre-cursor materials may be formed into a structure, e.g., a twisted or braided cable or wire having multiple strands or fibers or a tube with an outer shell and a powder contained in the lumen thereof. The structure may then be handled to subject a portion thereof, e.g., a tip, to the melting operation, e.g., by using it as a welding electrode or as a feed stock for additive manufacturing. When so used, the structure and its component pre-cursor materials may be melted, e.g., in a continuous or discrete process to form a weld bead or a line or dots of material deposited for additive manufacture.

In one embodiment, the metal product is a weld body or filler interposed between and joined to a material or material to the weld, e.g., two bodies of the same or different material or a body of a single material with an aperture that the filler at least partially fills. In another embodiment, the filler exhibits a transition zone of changing composition relative to the material to which it is welded, such that the resultant combination could be considered the alloy product.

### New materials consisting essentially of a bcc solid solution structure

While the above disclosure generally describes how to produce new bcc materials having precipitate phase(s) therein, it is also possible to produce a material consisting essentially of a bcc solid solution structure. For instance, after production of an ingot, a wrought body, a shape casting, or an additively manufactured body, as described above, the material may be homogenized, such as in a manner described relative to the dissolving step (20), above. With appropriate rapid cooling, precipitation of any second phase particles may be inhibited / restricted, thereby realizing a bcc solid solution material essentially free of any second phase particles, i.e., a material consisting essentially of a bcc solid solution structure. Properties of the new materials

The new materials may realize an improved combination of properties. In this section all mechanical properties are measured in the longitudinal (L) direction, unless otherwise specified. In this section "heat treated" means solution heat treated, then water quenched, and then heat treated at 515°C for 2 hours, and then air cooled.

In one approach, a new material realizes an as-cast tensile yield strength (TYS) of at least 715 MPa when tested in accordance with ASTM E8 at room temperature (RT). In one embodiment, a new material realizes an as-cast, RT TYS of at least 725 MPa. In another embodiment, a new material realizes an as-cast, RT TYS of at least 735 MPa. In yet another embodiment, a new material realizes an as-cast, RT TYS of at least 745 MPa. In another embodiment, a new material may realize an as-cast, RT TYS of at least 755 MPa. In yet another embodiment, a new material may realize an as-cast, RT TYS of at least 765 MPa. In another embodiment, a new material may realize an as-cast, RT TYS of at least 775 MPa. In yet another embodiment, a new material may realize an as-cast, RT TYS of at least 785 MPa. In another embodiment, a new material may realize an as-cast, RT TYS of at least 795 MPa. In yet another embodiment, a new material may realize an as-cast, RT TYS of at least 805 MPa. In another embodiment, a new material may realize an as-cast, RT TYS of at least 815 MPa. In any of these embodiments, a new material may realize an as-cast, RT elongation of at least 0.5 %. In any of these embodiments, a new material may realize an as-cast, RT elongation of at least 1.0 %. In any of these embodiments, a new material may realize an as-cast, RT elongation of at least 1.5 %. In any of these embodiments, a new material may realize an as-cast, RT elongation of at least 2.0 %. In any of these embodiments, a new material may realize an as-cast, RT elongation of at least 2.5 %. In any of these embodiments, a new material may realize an as-cast, RT elongation of at least 3.0 %. In any of these embodiments, a new material may realize an as-cast, RT elongation of at least 3.5 %. In any of these embodiments, a new material may realize an as-cast, RT elongation of at least 4.0 %.

In one approach, a new material may realize an as-cast ultimate tensile strength (UTS) of at least 840 MPa when tested in accordance with ASTM E8 at room temperature (RT). In one embodiment, a new material may realize an as-cast, RT UTS of at least 850 MPa. In another embodiment, a new material may realize an as-cast, RT UTS of at least 860 MPa. In yet another embodiment, a new material may realize an as-cast, RT UTS of at least 870 MPa. In another embodiment, a new material may realize an as-cast, RT UTS of at least 880 MPa. In yet another embodiment, a new material may realize an as-cast, RT UTS of at least 890 MPa. In another embodiment, a new material may realize an as-cast, RT UTS of at least 900 MPa. In any of these embodiments, a new material may realize an as-cast, RT elongation of at least 0.5 %. In any of these embodiments, a new material may realize an as-cast, RT elongation of at least 1.0 %. In any of these embodiments, a new material may realize an as-cast, RT elongation of at least 1.5 %. In any of these embodiments, a new material may realize an as-cast, RT elongation of at least 2.0 %. In any of these embodiments, a new material may realize an as-cast, RT elongation of at least 2.5 %. In any of these embodiments, a new material may realize an as-cast, RT elongation of at least 3.0 %. In any of these embodiments, a new material may realize an as-cast, RT elongation of at least 3.5 %. In any of these embodiments, a new material may realize an as-cast, RT elongation of at least 4.0%.

In one approach, a new material may realize a TYS of at least 900 MPa in the heat treated condition, when tested in accordance with ASTM E8 at room temperature. In one embodiment, a new material may realize a heat treated, RT TYS of at least 950 MPa. In another embodiment, a new material may realize a heat treated, RT TYS of at least 1000 MPa. In yet another embodiment, a new material may realize a heat treated, RT TYS of at least 1025 MPa. In another embodiment, a new material may realize a heat treated, RT TYS of at least 1050 MPa. In yet another embodiment, a new material may realize a heat treated, RT TYS of at least 1075 MPa. In another embodiment, a new material may realize a heat treated, RT TYS of at least 1100 MPa. In yet another embodiment, a new material may realize a heat treated, RT TYS of at least 1125 MPa. In another embodiment, a new material may realize a heat treated, RT TYS of at least 1150 MPa. In yet another embodiment, a new material may realize a heat treated, RT TYS of at least 1175 MPa. In another embodiment, a new material may realize a heat treated, RT TYS of at least 1200 MPa. In yet another embodiment, a new material may realize a heat treated, RT TYS of at least 1225 MPa. In another embodiment, a new material may realize a heat treated, RT TYS of at least 1250 MPa. In yet another embodiment, a new material may realize a heat treated, RT TYS of at least 1275 MPa. In another embodiment, a new material may realize a heat treated, RT TYS of at least 1300 MPa. In any of these embodiments, a new material may realize a heat treated, RT elongation of at least 0.5 %. In any of these embodiments, a new material may realize a heat treated, RT elongation of at least 1.0 %. In any of these embodiments, a new material may realize a heat treated, RT elongation of at least 1.5 %. In any of these embodiments, a new material may realize a heat treated, RT elongation of at least 2.0 %. In any of these embodiments, a new material may realize a heat treated, RT elongation of at least 2.5 %. In any of these embodiments, a new material may realize a heat treated, RT elongation of at least 3.0 %. In any of these embodiments, a new material may realize a heat treated, RT elongation of at least 3.5 %. In any of these embodiments, a new material may realize a heat treated, RT elongation of at least 4.0 %.

In one approach, a new material may realize a UTS of at least 1000 MPa in the heat treated condition, when tested in accordance with ASTM E8 at room temperature. In one embodiment, a new material may realize a heat treated, RT UTS of at least 1050 MPa. In another embodiment, a new material may realize a heat treated, RT UTS of at least 1100 MPa. In yet another embodiment, a new material may realize a heat treated, RT UTS of at least 1150 MPa. In another embodiment, a new material may realize a heat treated, RT UTS of at least 1200 MPa. In yet another embodiment, a new material may realize a heat treated, RT UTS of at least 1225 MPa. In another embodiment, a new material may realize a heat treated, RT UTS of at least 1250 MPa. In yet another embodiment, a new material may realize a heat treated, RT UTS of at least 1275 MPa. In another embodiment, a new material may realize a heat treated, RT UTS of at least 1300 MPa. In any of these embodiments, a new material may realize a heat treated, RT elongation of at least 0.5 %. In any of these embodiments, a new material may realize a heat treated, RT elongation of at least 1.0 %. In any of these embodiments, a new material may realize a heat treated, RT elongation of at least 1.5 %. In any of these embodiments, a new material may realize a heat treated, RT elongation of at least 2.0 %. In any of these embodiments, a new material may realize a heat treated, RT elongation of at least 2.5 %. In any of these embodiments, a new material may realize a heat treated, RT elongation of at least 3.0 %. In any of these embodiments, a new material may realize a heat treated, RT elongation of at least 3.5 %. In any of these embodiments, a new material may realize a heat treated, RT elongation of at least 4.0 %.

In one approach, the new materials may realize improved properties over a Ti-6Al-4V alloy of the same product form and heat treated when tested in accordance with ASTM E8 at room temperature. In one embodiment, the new materials may realize at least 3.0 % higher RT TYS as compared to a Ti-6Al-4V product of the same product form and heat treated. In one embodiment, the new materials may realize at least 5.0 % higher RT TYS as compared to a Ti-6Al-4V product of the same product form and heat treated. In one embodiment, the new materials may realize at least 7.0% higher RT TYS as compared to a Ti-6Al-4V product of the same product form and heat treated. In one embodiment, the new materials may realize at least 9.0% higher RT TYS as compared to a Ti-6Al-4V product of the same product form and heat treated. In one embodiment, the new materials may realize at least 11.0 % higher RT TYS as compared to a Ti-6Al-4V product of the same product form and heat treated. In one embodiment, the new materials may realize at least 13.0 % higher RT TYS as compared to a Ti-6Al-4V product of the same product form and heat treated. In one embodiment, the new materials may realize at least 15.0 % higher RT TYS as compared to a Ti-6Al-4V product of the same product form and heat treated. In any of these embodiments, the new materials may realize the higher TYS at equivalent elongation.

### BRIEF DESCRIPTION OF THE DRAWINGS

FIG. 1 is a schematic illustration of bcc, fcc, and hcp unit cells.
FIG. 2a is a graph of the Scheil model solidification path of Ti-4Al-8V-3Fe and Ti-1Al-8V-5Fe alloys.
FIG. 2b is a graph showing the effect of iron content on the freezing range of a Ti-4Al-8V-XFe alloy.
FIG. 2c is a graph showing the effect of iron content on the equilibrium phase fields of a Ti-4Al-8V-XFe alloy in the solid state.
FIG. 2d is a graph showing the effect of aluminum content on the equilibrium freezing range of a Ti-8V-3Fe-XAl alloy.
FIG. 2e is a graph of the effect of aluminum content on the equilibrium phase fields of a Ti-8V-3Fe-XAl alloy in the solid state.
FIG. 2f is a graph of the effect of vanadium content on the equilibrium freezing range of a Ti-4Al-3Fe-XV alloy.
FIG. 2g is a graph showing the effect of vanadium content on the equilibrium phase fields of a Ti-4Al-3Fe-XV alloy.
FIG. 3 is a flow chart of one embodiment of a method to produce a new material.
FIG. 4 is a flow chart of one embodiment of a method to obtain a wrought product having a bcc solid solution structure with one of more of the precipitates therein.

### DETAILED DESCRIPTION

### Example 1

A Ti-4Al-8V-3Fe and a conventional Ti-6Al-4V alloy were cast via arc melt casting into rods. After casting, mechanical properties of the as-cast alloys were measured in accordance with ASTM E8, the results of which are shown in Tables 3-4. Specimens of the heat treated Ti-4Al-8V-3Fe alloy were solution heat treated at 760°C for 0.5 hours, then water quenched, then heat treated at 515°C for 2 hours, and then air cooled. The mechanical properties of the heat treated alloys were then tested in accordance with ASTM E8, the results of which are shown in Table 4, below. All reported strength and elongation properties were from testing in the longitudinal (L) direction.

**Table 4 - Conventional Ti-6Al-4V Properties**

| **Condition** | **TYS (MPa)** | **UTS (MPa)** | **%EL** |
|---|---|---|---|
| **As-Cast** | 715 | 881 | 11 |

**Table 5 - Ti-4Al-8V-3Fe Properties**

| **Condition** | **TYS (MPa)** | **UTS (MPa)** | **%EL** |
|---|---|---|---|
| **As-Cast** | 816 | 877 | 2 |
| **Heat Treated** | 1273 | 1301 | 3 |

As shown in Tables 4-5, the tensile yield strength of the Ti-4Al-8V-3Fe alloy is improved over the Ti-6Al-4V alloy when tested at room temperature, without a corresponding reduction in ultimate tensile strength.

## Claims

1. A titanium alloy comprising:
2.0 - 6.0 wt. % Al;
4 - 8.75 wt. % V; and
2.5 - 5.0 wt. % Fe;
up to 1 wt. % Si;
up to 1 wt. % Y;
up to 1 wt. % Er;
up to 0.5 wt. % C;
up to 0.5 wt. % O; and
up to 0.5 wt. % B;
the balance being titanium (Ti)and unavoidable impurities;
wherein the titanium alloy includes a sufficient amount of the Ti, the Al, the V, and the Fe to realize a beta transus temperature of not greater than 850°C;
wherein the titanium alloy has a bcc crystalline structure, optionally with a small fraction of hcp through a solid-state transformation at a low temperature in the alloy; and
wherein the titanium alloy includes ≥ 0.5 vol. % of strengthening precipitates.

2. The titanium alloy of any of the preceding claims, wherein the alloy includes not greater than 4.50 wt. % Fe.

3. The titanium alloy of any of the preceding claims, wherein the alloy includes not greater that 4.0 wt. % Fe.

4. The titanium alloy of any of the preceding claims, wherein the alloy includes not greater than 3.5 wt. % Fe.

5. The titanium alloy of any of the preceding claims, wherein the alloy includes at least 2.5 wt. % Al.

6. The titanium alloy of any of the preceding claims, wherein the alloy includes at least 3.0 wt. % Al.

7. The titanium alloy of any of the preceding claims, wherein the alloy includes not greater than 5.5 wt. % Al.

8. The titanium alloy of any of the preceding claims, wherein the alloy includes not greater than 5.0 wt. % Al.

9. The titanium alloy of any of the preceding claims, wherein the alloy includes at least 5.0 wt. % V.

10. The titanium alloy of any of the preceding claims, wherein the alloy includes at least 6.0 wt. % V.

11. The titanium alloy of any of the preceding claims, wherein the alloy includes not greater than 8.5 wt. % V.

12. The titanium alloy of claim 1, comprising 6.0 - 8.75 wt. % V and 2.5 - 4.25 wt. % Fe.

13. The titanium alloy of claim 1, wherein the strengthening precipitates are located within the matrix of the bcc solid solution structure.

## Patentansprüche

1. Titanlegierung, umfassend:
2,0-6,0 Gew.-% Al;
4-8,75 Gew.-% V; und
2,5-5,0 Gew.-% Fe;
bis zu 1 Gew.-% Si;
bis zu 1 Gew.-% Y;
bis zu 1 Gew.-% Er;
bis zu 0,5 Gew.-% C;
bis zu 0,5 Gew.-% O; und
bis zu 0,5 Gew.-% B;
wobei der Rest aus Titan (Ti) und unvermeidlichen Verunreinigungen besteht;
wobei die Titanlegierung eine ausreichende Menge an Ti, Al, V und Fe enthält, um eine Beta-Transus-Temperatur von nicht mehr als 850 °C zu realisieren;
wobei die Titanlegierung eine bcc-Kristallstruktur aufweist, gegebenenfalls mit einem geringen Anteil an hcp durch eine Festkörpertransformation bei einer niedrigen Temperatur in der Legierung; und
wobei die Titanlegierung ≥ 0,5 Vol.-% Verfestigungsausscheidungen enthält.

2. Titanlegierung nach einem der vorhergehenden Ansprüche, wobei die Legierung nicht mehr als 4,50 Gew.-% Fe enthält.

3. Titanlegierung nach einem der vorhergehenden Ansprüche, wobei die Legierung nicht mehr als 4,0 Gew.-% Fe enthält.

4. Titanlegierung nach einem der vorhergehenden Ansprüche, wobei die Legierung nicht mehr als 3,5 Gew.-% Fe enthält.

5. Titanlegierung nach einem der vorhergehenden Ansprüche, wobei die Legierung zumindest 2,5 Gew.-% Al enthält.

6. Titanlegierung nach einem der vorhergehenden Ansprüche, wobei die Legierung zumindest 3,0 Gew.-% Al enthält.

7. Titanlegierung nach einem der vorhergehenden Ansprüche, wobei die Legierung nicht mehr als 5,5 Gew.-% Al enthält.

8. Titanlegierung nach einem der vorhergehenden Ansprüche, wobei die Legierung nicht mehr als 5,0 Gew.-% Al enthält.

9. Titanlegierung nach einem der vorhergehenden Ansprüche, wobei die Legierung zumindest 5,0 Gew.-% V enthält.

10. Titanlegierung nach einem der vorhergehenden Ansprüche, wobei die Legierung zumindest 6,0 Gew.-% V enthält.

11. Titanlegierung nach einem der vorhergehenden Ansprüche, wobei die Legierung nicht mehr als 8,5 Gew.-% V enthält.

12. Titanlegierung nach Anspruch 1, umfassend 6,0-8,75 Gew.-% V und 2,5-4,25 Gew.-%. Fe.

13. Titanlegierung nach Anspruch 1, wobei die Verfestigungsausscheidungen innerhalb der Matrix der bcc-Mischkristallstruktur angeordnet sind.

## Revendications

1. Alliage de titane comprenant :
2,0 à 6,0 % en poids de Al ;
4 à 8,75 % en poids de V ; et
2,5 à 5,0 % en poids de Fe ;
jusqu'à 1 % en poids de Si ;
jusqu'à 1 % en poids de Y ;
jusqu'à 1 % en poids de Er ;
jusqu'à 0,5 % en poids de C ;
jusqu'à 0,5 % en poids de O ; et
jusqu'à 0,5 % en poids de B ;
le reste étant du titane (Ti) et des impuretés inévitables ;
dans lequel l'alliage de titane comporte une quantité suffisante de Ti, de Al, de V et de Fe pour réaliser une température de transus bêta non supérieure à 850 °C ;
dans lequel l'alliage de titane a une structure cristalline BCC, facultativement avec une petite fraction de HCP par une transformation à l'état solide à basse température dans l'alliage ; et
dans lequel l'alliage de titane comporte ≥ 0,5 % en volume de précipités de renforcement.

2. Alliage de titane selon l'une quelconque des revendications précédentes, dans lequel l'alliage ne comporte pas plus de 4,50 % en poids de Fe.

3. Alliage de titane selon l'une quelconque des revendications précédentes, dans lequel l'alliage ne comporte pas plus de 4,0 % en poids de Fe.

4. Alliage de titane selon l'une quelconque des revendications précédentes, dans lequel l'alliage ne comporte pas plus de 3,5 % en poids de Fe.

5. Alliage de titane selon l'une quelconque des revendications précédentes, dans lequel l'alliage comporte au moins 2,5 % en poids de Al.

6. Alliage de titane selon l'une quelconque des revendications précédentes, dans lequel l'alliage comporte au moins 3,0 % en poids de Al.

7. Alliage de titane selon l'une quelconque des revendications précédentes, dans lequel l'alliage ne comporte pas plus de 5,5 % en poids de Al.

8. Alliage de titane selon l'une quelconque des revendications précédentes, dans lequel l'alliage ne comporte pas plus de 5,0 % en poids de Al.

9. Alliage de titane selon l'une quelconque des revendications précédentes, dans lequel l'alliage comporte au moins 5,0 % en poids de V.

10. Alliage de titane selon l'une quelconque des revendications précédentes, dans lequel l'alliage comporte au moins 6,0 % en poids de V.

11. Alliage de titane selon l'une quelconque des revendications précédentes, dans lequel l'alliage ne comporte pas plus de 8,5 % en poids de V.

12. Alliage de titane selon la revendication 1, comprenant 6,0 à 8,75 % en poids de V et 2,5 à 4,25 % en poids de Fe.

13. Alliage de titane selon la revendication 1, dans lequel les précipités de renforcement sont situés au sein de la matrice de la structure BCC en solution solide.
